# EUROPEAN PATENT APPLICATION

(11) **EP 4 815 618 A1**
(43) Date of publication of application: **30.09.2026**
(21) Application number: 25166833.1
(22) Date of filing: 27.03.2025
(51) Int. Cl.: H04W 76/20, H04W 36/06, H04W 36/08, H04W 48/20, H04W 52/02, H04W 36/30

(54) **METHOD AND APPARATUS FOR CELL RESELECTION WITH RANDOMIZATION**

(71) Applicant: Nokia Technologies Oy, 02610 Espoo (FI)
(72) Inventor: KOSKINEN, Jussi-Pekka, Oulu (FI); KAIKKONEN, Jorma, Oulu (FI); KAINULAINEN, Jani-Pekka Juhani, Cottenham (GB); JAYAWARDANA, Palihawadana Arachchige Dinu Nirmal, Espoo (FI); ALI, Amaanat, Espoo (FI)
(74) Representative: Davis, Steven George

(57) **Abstract**

There is provided a terminal device comprising: at least one processor; and at least one memory storing instructions that, when executed by the at least one processor, causes the terminal device to perform: obtaining a set of carrier frequencies; obtaining a set of randomization parameters for configuring a randomization procedure for cell reselection, wherein the set of randomization parameters are associated with a particular time period; and responsive to determining that a current time is within the particular time period associated with the set of randomization parameters, selecting, based on at least the set of randomization parameters, a carrier frequency, from the set of carrier frequencies, with which to perform a cell reselection procedure.

## Description

### Field

Example embodiments relate to methods, apparatus, and computer programs for cell reselection with randomization.

### Background

In addition to a main receiver (MR), some terminal devices are equipped with low-power wake-up receivers (LR), which may consume relatively less power to operate. Low power wake-up signals (LP-WUS) can be used to configure such terminal devices to operate in particular modes or states that utilize the LR or the MR, such that power consumption can be reduced. However, in some situations, not all available carrier frequencies support LP-WUS.

### Summary

The scope of protection sought for various embodiments of the invention is set out by the independent claims. Some embodiments of the invention are defined in the dependent claims. The embodiments and features, if any, described in this specification that do not fall under the scope of the independent claims are to be interpreted as examples useful for understanding various embodiments of the invention.

According to a first aspect of the invention, there is provided a terminal device comprising at least one processor, and at least one memory storing instructions that, when executed by the at least one processor, causes the terminal device to perform obtaining a set of carrier frequencies; obtaining a set of randomization parameters for configuring a randomization procedure for cell reselection, wherein the set of randomization parameters are associated with a particular time period; and responsive to determining that a current time is within the particular time period associated with the set of randomization parameters, selecting, based on at least the set of randomization parameters, a carrier frequency, from the set of carrier frequencies, with which to perform a cell reselection procedure.

According to a second aspect of the invention, there is provided a terminal device comprising at least one processor, and at least one memory storing instructions that, when executed by the at least one processor, causes the terminal device to perform obtaining a set of carrier frequencies; obtaining a set of randomization parameters for configuring a randomization procedure for cell reselection; receiving, from a network node, an indication to perform the randomization procedure for cell reselection; and responsive to receiving the indication to perform the randomization procedure for cell reselection, selecting, based on at least the set of randomization parameters, a carrier frequency, from the set of carrier frequencies, with which to perform a cell reselection procedure.

According to a third aspect of the invention, there is provided a terminal device comprising at least one processor, and at least one memory storing instructions that, when executed by the at least one processor, causes the terminal device to perform obtaining a set of carrier frequencies; obtaining a set of randomization parameters for configuring a randomization procedure for cell reselection; determining whether to perform the randomization procedure for cell reselection and/or whether to perform the randomization procedure using the obtained set of randomization parameters; and responsive to determining to perform the randomization procedure for cell reselection and/or to perform the randomization procedure using the obtained set of randomization parameters, selecting, based on at least the set of randomization parameters, a carrier frequency, from the set of carrier frequencies, with which to perform a cell reselection procedure.

According to a fourth aspect of the invention, there is provided a method comprising obtaining a set of carrier frequencies; obtaining a set of randomization parameters for configuring a randomization procedure for cell reselection, wherein the set of randomization parameters are associated with a particular time period; and responsive to determining that a current time is within the particular time period associated with the set of randomization parameters, selecting, based on at least the set of randomization parameters, a carrier frequency, from the set of carrier frequencies, with which to perform a cell reselection procedure.

According to a fifth aspect of the invention, there is provided a method comprising obtaining a set of carrier frequencies; obtaining a set of randomization parameters for configuring a randomization procedure for cell reselection; receiving, from a network node, an indication to perform the randomization procedure for cell reselection; and responsive to receiving the indication to perform the randomization procedure for cell reselection, selecting, based on at least the set of randomization parameters, a carrier frequency, from the set of carrier frequencies, with which to perform a cell reselection procedure.

According to a sixth aspect of the invention, there is provided a method comprising obtaining a set of carrier frequencies; obtaining a set of randomization parameters for configuring a randomization procedure for cell reselection; determining whether to perform the randomization procedure for cell reselection and/or whether to perform the randomization procedure using the obtained set of randomization parameters; and responsive to determining to perform the randomization procedure for cell reselection and/or to perform the randomization procedure using the obtained set of randomization parameters, selecting, based on at least the set of randomization parameters, a carrier frequency, from the set of carrier frequencies, with which to perform a cell reselection procedure.

According to a seventh aspect of the invention, there is provided an apparatus comprising: means for obtaining a set of carrier frequencies; means for obtaining a set of randomization parameters for configuring a randomization procedure for cell reselection, wherein the set of randomization parameters are associated with a particular time period; and means for, responsive to determining that a current time is within the particular time period associated with the set of randomization parameters, selecting, based on at least the set of randomization parameters, a carrier frequency, from the set of carrier frequencies, with which to perform a cell reselection procedure.

According to an eighth aspect of the invention, there is provided an apparatus comprising means for obtaining a set of carrier frequencies; means for obtaining a set of randomization parameters for configuring a randomization procedure for cell reselection; means for receiving, from a network node, an indication to perform the randomization procedure for cell reselection; and means for, responsive to receiving the indication to perform the randomization procedure for cell reselection, selecting, based on at least the set of randomization parameters, a carrier frequency, from the set of carrier frequencies, with which to perform a cell reselection procedure.

According to a ninth aspect of the invention, there is provided an apparatus comprising means for obtaining a set of carrier frequencies; means for obtaining a set of randomization parameters for configuring a randomization procedure for cell reselection; means for determining whether to perform the randomization procedure for cell reselection and/or whether to perform the randomization procedure using the obtained set of randomization parameters; and means for, responsive to determining to perform the randomization procedure for cell reselection and/or to perform the randomization procedure using the obtained set of randomization parameters, selecting, based on at least the set of randomization parameters, a carrier frequency, from the set of carrier frequencies, with which to perform a cell reselection procedure

According to a tenth aspect of the invention, there is provided a computer program product comprising instructions which, when executed by an apparatus, cause the apparatus to perform (at least) any method as described herein (including the methods of the fourth to sixth aspects described above).

According to an eleventh aspect of the invention, there is provided a computer-readable medium (such as a non-transitory computer-readable medium) comprising program instructions stored thereon for performing (at least) any method described herein (including the methods of the fourth to sixth aspects described above).

According to a twelfth aspect of the invention, there is provided computer-readable instructions which, when executed by a computing apparatus, cause the computing apparatus to perform (at least) any method as described herein (including the methods of the fourth to sixth aspects described above).

### Brief Description of the Drawings

In the following, the invention will be described in greater detail with reference to the embodiments and the accompanying drawings, in which
FIG. 1 shows an example of a communication network to which examples disclosed herein may be applied;
FIGS. 2A and 2B show example operations that may be performed by terminal devices in response to various wake-up signals;
FIGS. 3 to 6 show signaling flow diagrams depicting various example methods;
FIGS. 7 to 9 show various examples of methods; and
FIG. 10 shows an example of an apparatus.

### Detailed Description

Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a communication network, such as any of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is capable of controlling radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

Moreover, in connection of split radio access network (RAN), the network device may refer to a centralised unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include e.g. a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

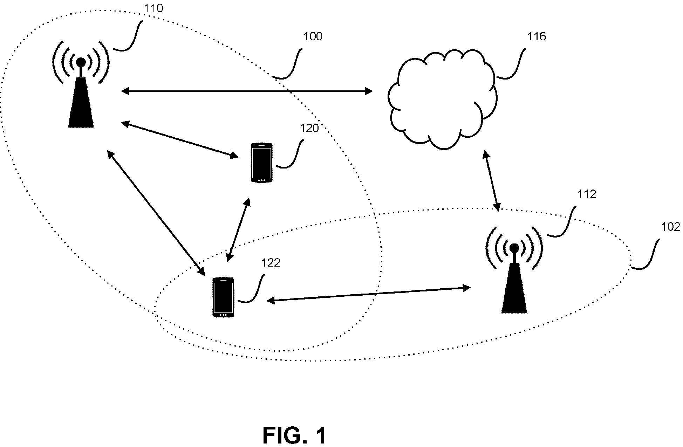

FIG. 1 illustrates an example of a communication network to which examples disclosed herein may be applied. The communication network or a cellular communication network may comprise a network node 110 providing one or more cells, such as cell 100, and a network node 112 providing one or more other cells, such as cell 102. Each cell may be, e.g., a macro cell, a micro cell, femto, or a pico cell, for example. The cell may define a coverage area or a service area of the corresponding access node.

The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 120, 122 in the system. Each of them may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 110 and 112 may be further connected via another interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

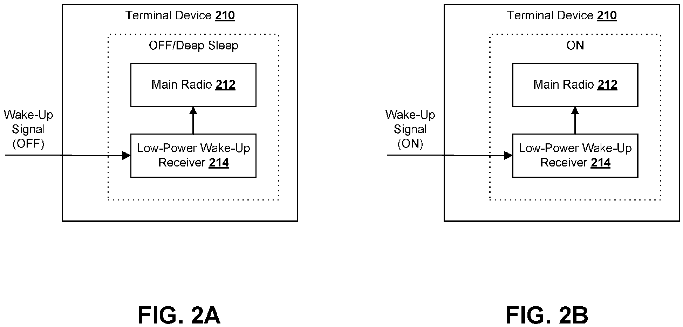

In some cases, a terminal device (e.g., terminal devices 120 or 122) can be equipped with a low-power wake-up receiver (LR), as well as a main receiver (MR), to enable the terminal device to reduce power consumption. Wake-up signals can be used to configure such terminal devices in relation to usage of an LR or an MR. FIGS. 2A and 2B depict example operations that may be performed by such terminal devices in response to various wake-up signals (also referred to as low-power wake-up signals (LP-WUS)).

Turning to FIG. 2A, example operations that can be performed by a terminal device 210 in response to a first type of wake-up signal are depicted. The terminal device 210 can be the same or similar to any of the terminal devices described herein (e.g., terminal device 120 or 122 of FIG. 1, etc.,). As depicted in FIG. 2A, the terminal device 210 can include a main radio 212 (otherwise referred to as a main receiver, a main transmitter, a main transceiver, etc.,), and a low-power wake-up receiver 214 (otherwise referred to as a low-power receiver or a wake-up receiver). The low-power wake-up receiver 214 can consume relatively less power in operation than the main receiver 212. As such, the low-power wake-up receiver 214 can be configured to be always on (e.g., to monitor for wake-up signals), with minimal power consumption.

As further depicted in FIG. 2A, the terminal device can receive a first type of wake-up signal (e.g., at the low-power wake-up receiver 214). The first type of wake-up signal can be an OFF wake-up signal, or in other words, an indication that the terminal device 210 enter an OFF (or Deep Sleep) state. Responsive to receiving the OFF wake-up signal, the terminal device 210 can correspondingly enter the OFF (or Deep Sleep) state. In this state, the terminal device 210 can use the low-power wake-up receiver 214, instead of the main radio 212 (e.g., by turning the main radio 212 off), in order to reduce power consumption. The terminal device 210 may remain in the OFF (or Deep Sleep) state until a subsequent wake-up signal (such as an ON wake-up signal) is received.

Turning now to FIG. 2B, example operations that can be performed by the terminal device 210 in response to a second type of Wake-Up signal are depicted. As depicted in FIG. 2B, the terminal device 210 can receive a second type of wake-up signal (e.g., at the low-power wake-up receiver 214). The second type of wake-up signal can be an ON wake-up signal, or in other words, an indication that the terminal device 210 enter an ON state. Responsive to receiving the ON wake-up signal, the terminal device 210 can correspondingly enter the ON state. In this state, the terminal device 210 can use (or wake up) the main radio 212, and start communication using the main radio 212. The terminal device 210 may remain in the ON state until a subsequent wake-up signal (such as an OFF wake-up signal) is received.

The wake-up signals described in relation to FIGS. 2A and 2B may be received from the network (e.g., from a network node, which may be similar or the same as any network node described herein, including network node 110 or network node 112). In other words, the network can be said to trigger the terminal device 210 to wake up in an event-driven manner by transmitting the wake-up signal (or LP-WUS), which is monitored by the low-power wake-up receiver 214 at the terminal device 210.

In some implementations, in addition to WUS monitoring, serving cell evaluations can be offloaded from the main radio 212 to the low-power wake-up receiver 214. For instance, the low-power wake-up receiver 214 can carry out serving cell evaluation related measurements based on a received signal from the serving cell, which may be specific to the type of low-power wake-up receiver 214 (e.g., a reference signal, a low power synchronisation signal (LP-SS), a synchronization signal block (SSB), etc.,). In some implementations, the low-power wake-up receiver 214 can carry out serving cell evaluation when an entry condition of serving cell measurement is satisfied. In some implementations, if serving cell measurement is not available using the main radio 212, neighboring cell measurement relaxation can be determined based on the low-power wake-up receiver 214 measurement results.

In some cases, the terminal device 210 and/or the network may not support LP-WUS on all of the carrier frequencies that are supported by the terminal device 210 and network. For instance, only specific carrier frequencies of a given frequency band may support LP-WUS, only some frequency bands may support LP-WUS (e.g., such that the carrier frequencies of such frequency bands support LP-WUS), etc. Situations may therefore occur in which the terminal device 210 is camping on a carrier frequency that does not support LP-WUS capabilities. As such, power saving gains which could be obtained through low-power wake-up receiver 214 measurements (e.g., rather than main radio 212 measurements) are not achieved. Furthermore, power saving gains from monitoring LP-WUS using the low-power wake-up receiver 214 (e.g., rather than paging occasion using the main radio 212) are lost.

As such, it can be indicated to the terminal device 210 (e.g., by the network) whether a specific carrier frequency (or the frequency band of which the carrier frequency belongs) can support LP-WUS (e.g., via LP-WUS specific cell reselection priorities). During cell reselection, the terminal device 210 can therefore consider (e.g., or prioritise) carrier frequencies that support LP-WUS. For instance, the terminal device 210 can be configured to only consider for cell reselection carrier frequencies that support LP-WUS and that are associated with the highest cell reselection priority (or at least a cell reselection priority above a cell reselection priority threshold). However, this may lead to carrier frequencies that support LP-WUS being overloaded, since carrier frequencies that support LP-WUS may be selected by terminal devices for cell reselection at an increased rate.

Implementations described herein relate to introducing randomization to priority based cell reselection in order to distribute terminal devices across carrier frequencies such that particular carrier frequencies are prevented from being overloaded. Some of these implementations relate more specifically to such techniques to prevent carrier frequencies (or frequency bands) that support LP-WUS from being overloaded.

In particular, various implementations described herein relate to a randomization procedure for cell reselection, which can be based on a set of randomization parameters.

In some implementations, the randomization parameters can be associated with particular time periods, such that a terminal device, when performing cell reselection at a time within a particular time period, can apply the corresponding randomization parameters. This can be referred to as time-dependent activation of randomized cell reselection. In this way, terminal devices can be proactively distributed based on time information (e.g., to account for times that are known or estimated to be particularly busy). In some implementations, a terminal device can be explicitly indicated by a network to activate randomized cell reselection (e.g., when the network detects a high loading on one or more carrier frequencies. This can be referred to as explicit network activation of randomized cell reselection. In this way, the terminal devices can be distributed as a reaction to an occurrence of overloading (or an imminent occurrence being predicted). In some implementations, the user device can itself determine whether or not to activate randomized cell reselection.

In some implementations, the randomization parameters can be configured by a network node. In some implementations, at least some of the randomization parameters can be configured by the terminal device itself. In some implementations, the randomization parameters can configure the type of randomization procedure to be performed by the terminal device. For instance, the randomization parameters can include an indication that causes the terminal device to perform time-dependent activated randomization, explicit network activated randomization, and/or terminal device configured randomization.

The randomization parameters can, for instance, include an indication of probabilities to be considered for a randomization function for selecting a carrier frequency for cell reselection. For instance, the randomization parameters can include an indication of values indicative of probabilities for a number of carrier frequencies. A value of zero may correspond to a probability of zero, a value of one sixteenth may correspond to a probability of 1/16, a value of one fifteenth may correspond to a probability of 1/15, and so on. An absent value for a given carrier frequency can be assigned a default probability (e.g., a probability of zero, a probability of 1, etc.,). The cell reselection can then be based, at least in part, on the probabilities.

In some implementations, the randomization parameters can include an indication of a first probability for a first type of carrier frequency (e.g., carrier frequencies that support LP-WUS), and a second probability for a second type of carrier frequency (e.g., carrier frequencies that do not support LP-WUS). The probability for the second type of carrier frequency can, for instance, be set to zero (e.g., such that carrier frequencies that do not support LP-WUS will not be selected for cell reselection).

The randomization parameters can, for instance, include an indication of relative weights for a number of carrier frequencies (e.g., for uneven terminal device distribution across the carrier frequencies), where, the larger the relative weight, the more likely that the corresponding carrier frequency will be selected in the randomization procedure. For instance, value w0 may correspond to a relative weight of zero (e.g., meaning no chance of being selected), value w1 may correspond to a relative weight of 1, w2 may correspond to a relative weight of 2, and so on. An absent value for a given carrier frequency can be assigned a default relative weight (e.g., a relative weight of zero). Similarly to the probabilities, in some implementations, the randomization parameters can include an indication of a first relative weight for a first type of carrier frequency (e.g., carrier frequencies that support LP-WUS), and a second relative weight for a second type of carrier frequency (e.g., carrier frequencies that do not support LP-WUS).

The randomization parameters can, for instance, include an indication of absolute cell reselection priority offsets (otherwise referred to as offsets for the absolute cell reselection priorities, or in other words, offsets that can be applied to corresponding absolute cell reselection priorities to determine modified absolute cell reselection priorities) for a number of carrier frequencies. The absolute cell reselection priority offsets can, for instance, be positive or negative integers that can be summed with the corresponding absolute cell reselection priorities for the carrier frequencies (e.g., to determine modified absolute cell reselection priorities). The carrier frequency with the highest modified absolute cell reselection priority can then be selected for cell reselection. In some implementations, the absolute cell reselection priority offsets can be provided by a network node as part of the randomization parameters. In some implementations, the terminal device can determine the absolute cell reselection priority offsets (e.g., by random selection between some maximum and minimum value). Additionally or alternatively, the terminal device can determine whether to apply an absolute cell reselection priority offset to a given carrier frequency (e.g., by random selection of the carrier frequencies using probabilities, relative weights, etc.,).

Although the examples of probabilities, random weights, and absolute cell reselection priority offsets are described herein, it will be appreciated that any suitable randomization parameter that could be used in a randomization procedure for selecting the carrier frequency can be used.

In some implementations, the randomization parameters can include a specific list of carrier frequencies which should be considered in the cell reselection (e.g., and with which to apply the randomization procedure). For instance, the list can be provided as an idle-mode reselection measurement list (e.g., measReselectionCarrierListNR). In some implementations, the terminal device can consider in the cell reselection (e.g., and apply the randomization procedure to) a number of carrier frequencies equal to the number of inter-frequency carriers in the specific list. For instance, if the specific list includes Y inter-frequency carriers, the terminal device can randomly select from Y carrier frequencies a set of indices (pointing to a given carrier frequency) from the specific list of carrier frequencies.

In some implementations, the randomization parameters can also include an indication of the carrier frequencies that support LP-WUS. Additionally or alternatively, the randomization parameters can include an indication of the frequency bands that support LP-WUS (where it is understood that each of the carrier frequencies of these frequency bands will support LP-WUS). In some implementations, the randomization parameters can include an indication to only consider in the cell reselection (and apply the randomization procedure to) carrier frequencies that support LP-WUS. In some implementations, the specific list of carrier frequencies may only include carrier frequencies that support LP-WUS.

The randomization procedure itself can be implemented in any number of manners. As one example, an initial set of carrier frequencies can each be associated with a corresponding randomization parameter (e.g., probability, relative weight, etc.,). Ordinarily (e.g., when a randomization procedure is not performed), the carrier frequency with the highest absolute cell reselection priority from the initial set of carrier frequencies can be selected for cell reselection. However, in this example, a subset of the carrier frequencies can be determined based on randomly selecting carrier frequencies from the initial set, according to the corresponding randomization parameters. The carrier frequency with the highest absolute cell reselection priority, from the subset of carrier frequencies, can then be selected for cell reselection.

For instance, assume that an initial set of carrier frequencies includes four carrier frequencies with indices [X1, X2, X3, X4] respectively. Further assume that the initial set of carrier frequencies are associated with absolute cell reselection priorities [P1, P2, P3, P4] respectively. Further assume that the initial set of carrier frequencies are associated with the randomization parameters [R1, R2, R3, R4] respectively. For instance, the randomization parameters can be probabilities, e.g., [R1=1/2, R2=1/16, R3=1/8, R4=0], where each carrier frequency has that corresponding probability of being included in the subset (e.g., X1 has a 1/2 probability of being included in the subset, X2 has a 1/16 probability of being included in the subset, and so on). It will be appreciated that any suitable randomization parameter can be used. Based on the randomization parameters, a subset of the initial set of carrier frequencies can be determined. For instance, the subset of carrier frequencies could include carrier frequencies [X1, X3]. The carrier frequency with the highest associated absolute cell reselection priority can then be found from the subset of carrier frequencies. For instance, assuming that P3>P1, the carrier frequency with index X3 can be identified. This carrier frequency can then be selected as the carrier frequency with which to perform cell reselection.

As another example, the randomization parameters (e.g., probabilities, relative weights, etc.,) can override the absolute cell reselection priorities for the carrier frequencies. For instance, the terminal device can randomly select one of the carrier frequencies, according to the randomization parameters, effectively ignoring the absolute cell reselection priorities corresponding to the carrier frequencies.

For instance, similar to the example above, assume that a set of carrier frequencies includes four carrier frequencies with indices [X1, X2, X3, X4] respectively. Further assume that the set of carrier frequencies are associated with absolute cell reselection priorities [P1, P2, P3, P4] respectively. Further assume that the set of carrier frequencies are associated with the randomization parameters [R1, R2, R3, R4] respectively. For instance, the randomization parameters can be probabilities, e.g., [R1= 1/2, R2=1/16, R3=1/8, R4=0], where each carrier frequency has that corresponding probability of being selected for cell reselection (e.g., X1 has a 1/2 probability of being selected, X2 has a 1/16 probability of being selected, and so on). It will be appreciated that any suitable randomization parameter can be used. Based on the randomization parameters, a carrier frequency can then be selected as the carrier frequency with which to perform cell reselection (e.g., without considering the corresponding absolute cell reselection priorities). For instance, based on the randomization parameters, the carrier frequency with index X1 may be selected as the carrier frequency with which to perform cell reselection.

As another example, the absolute cell reselection priorities for the carrier frequencies themselves can be randomized. For instance, the absolute cell reselection priority can be modified or replaced, based on a randomization procedure (e.g., the carrier frequencies selected to have their absolute cell reselection priorities modified or replaced can be randomly selected, the absolute cell reselection priority values to replace existing absolute cell reselection priority values can be randomly selected, the modifications to existing absolute cell reselection priority can be randomly selected, etc.,).

For instance, similar to the examples above, assume that a set of carrier frequencies includes four carrier frequencies with indices [X1, X2, X3, X4] respectively. Further assume that the set of carrier frequencies are associated with absolute cell reselection priorities [P1, P2, P3, P4] respectively. Further assume that the set of carrier frequencies are associated with the randomization parameters [R1, R2, R3, R4] respectively. For instance, the randomization parameters can be probabilities, e.g., [R1=1/2, R2=1/16, R3=1/8, R4=0], where each carrier frequency has that corresponding probability of having an absolute cell reselection priority being applied (e.g., X1 has a 1/2 probability of having an absolute cell reselection priority being applied, X2 has a 1/16 probability of having an absolute cell reselection priority being applied, and so on). It will be appreciated that any suitable randomization parameter can be used. Based on the randomization parameters, at least some of the carrier frequencies can be selected to have a corresponding absolute cell reselection priority offset applied, such that one or more of the absolute cell reselection priorities can be modified, or updated. For instance, assuming that X1 and X3 are selected based on the randomization parameters, the absolute cell reselection priorities can be updated to include [P1*=P1+O1, P2, P3*=P3+O3, P4], where O1 and O3 are the corresponding with absolute cell reselection priority offsets, and P1* and P3* are modified randomization parameters. The absolute cell reselection priority offsets O1 and O2 can, for instance, be included in the randomization parameters (e.g., R1=[1/2, O1], R2=[1/16, O2], and so on), determined based on some further randomization procedure by the terminal device, etc. The carrier frequency with the highest associated absolute cell reselection priority (from the updated set of absolute cell reselection priority offsets) can then be found. For instance, assuming that P1*>P2, P3*, P4, the carrier frequency with index X1 can be identified. This carrier frequency can then be selected as the carrier frequency with which to perform cell reselection.

In some implementations, timestamp-based randomization can be used. For instance, the terminal device may use a timestamp corresponding to a current time as a seed for the randomization procedure. In some implementations, only selected components of the timestamp (e.g. millisecond, second, minute or hour component are used) can be used. By utilising timestamp-based randomization, particularly when using relatively low granularity timestamps, it can be ensured that multiple instances of cell reselection within a sufficiently close time interval will result in the same carrier frequency being selected (e.g., and thereby avoid a terminal device quickly switching between carrier frequencies). Additionally or alternatively, by utilising timestamp-based randomization, particularly when using relatively high granularity timestamps, it can be ensured that the terminal device multiple instances of cell reselection within a close time interval will not result in the same carrier frequency or carrier frequencies being repeatedly selected. In other words, if the terminal device has already selected a particular carrier frequency once, by utilising timestamp-based randomization it is less likely that the terminal device will select that same carrier frequency again within a short period of time. The randomization parameters can include an indication of whether to use timestamp-based randomization, and/or the components to be used for the randomization.

In some implementations, the applied randomization procedure and/or the carrier frequencies to which the randomization procedure is applied can be dependent on terminal device parameters. The terminal device parameters can, for instance, include terminal device capability information (e.g., support of 6G, support of RedCap, including a LP-WUS receiver, narrowband Internet Of Things (IoT), etc.,), an identifier associated with the terminal device (e.g., international mobile subscriber identity (IMSI), inactive radio network temporary identifier (I-RNTI), etc.,), etc. For instance, based on the terminal device supporting 6G, only carrier frequencies of this radio access technology may be considered/randomized; based on the terminal device supporting RedCap, the terminal device may utilize this type of randomization in the randomization procedure (e.g., and if it is not supported, the terminal device may determine to perform cell reselection without a randomization procedure); based on the terminal device including a LP-WUS receiver, only carrier frequencies that support LP-WUS may be considered/randomized; etc. As another example, an identifier associated with the terminal device may be used as a seed for the randomization procedure.

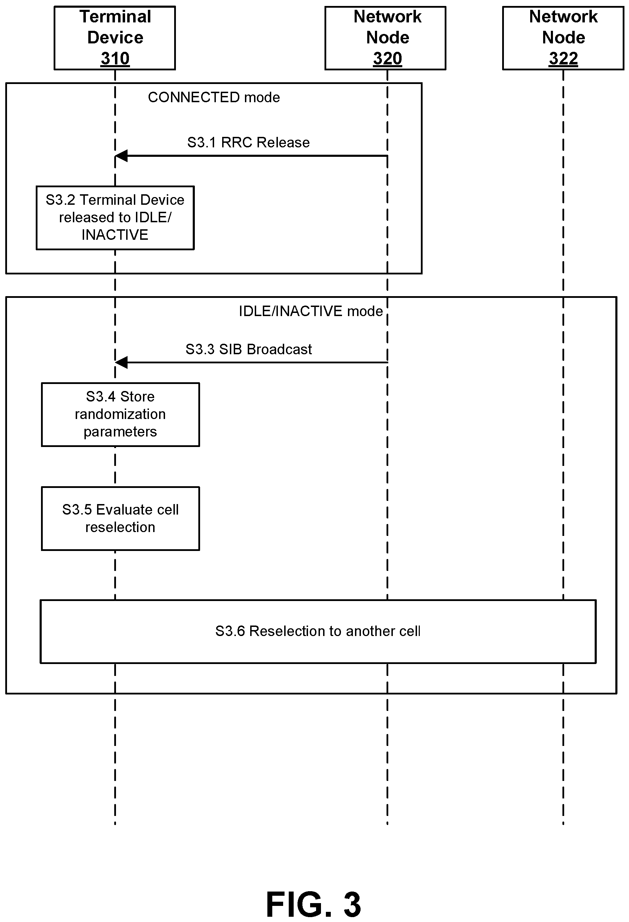

Turning to FIG. 3, a message flow sequence of an example method for cell reselection (e.g., time-dependent activation of randomized cell reselection) is depicted. One or more of the operations depicted in FIG. 3 can be performed by a terminal device 310, which can be the same or similar to any terminal device as described herein (such as terminal device 120 or terminal device 122 in FIG. 1, or terminal device 210 of FIG. 2A and FIG. 2B). Furthermore, one or more of the operations depicted in FIG. 3 can be performed by a first network node 320 or a second network node 322, which can be the same or similar to any network node described herein (e.g., such as network node 110 or network node 112 in FIG. 1). For instance, the message flow sequence of FIG. 3 can be performed by one or more entities of a communication system similar to the communication system described in relation to FIG. 1.

At operation S3.1, the network node 320 sends a radio resource control (RRC) release message to the terminal device 310. The terminal device 310 can correspondingly receive the RRC release message. In some implementations, the terminal device 310 can initially be in a CONNECTED mode with the network node 320. The RRC release message can be an indication for the terminal device 310 to transition to an IDLE or INACTIVE mode.

In some implementations, the RRC release message can include one or more randomization parameters. In some implementations, one or more randomization parameters can be sent to the terminal device 310 by the network node 320 whilst in the CONNECTED mode using a type of message other than a RRC release message, such as another type of RRC message. In some implementations, the network node 320 can send one or more randomization parameters via dedicated signalling. However, as described in more detail herein, one or more randomization parameters can additionally or alternatively be sent to the terminal device 310, by the network node 320, in other manners.

At operation S3.2, after having received the RRC release message, the terminal device 310 is released to an IDLE or INACTIVE mode (e.g., corresponding to the indication in the RRC release message).

At operation S3.3, the network node 320 transmits a system information block (SIB) broadcast, which is correspondingly received by the terminal device 310. In some implementations, one or more randomization parameters can be received by the terminal device 310 in the SIB broadcast. The SIB broadcast can, for instance, be a system information block type 1 (SIB1) broadcast. Additionally or alternatively, the SIB broadcast can be a SIB4 type broadcast, for instance, in relation to inter-frequency cell reselection. Additionally or alternatively, the SIB broadcast can be a SIB5 type broadcast, for instance, in relation to inter-RAT cell reselection.

In some implementations, the network node 310 can provide, to the terminal device 310, an indication of carrier frequencies to be considered in the cell reselection (e.g., and with which to apply the randomization procedure). The indication can, for instance, include a specific list of carrier frequencies, all of which should be considered. As another example, the indication can include an indication of a subset of carrier frequencies from a list of carrier frequencies that should be considered. As another example, the indication can include an indication to only consider carrier frequencies or frequency bands that support LP-WUS.

The indication can, for instance, be provided as part of a SIB4 broadcast. An example segment of such a SIB4 broadcast is provided below: 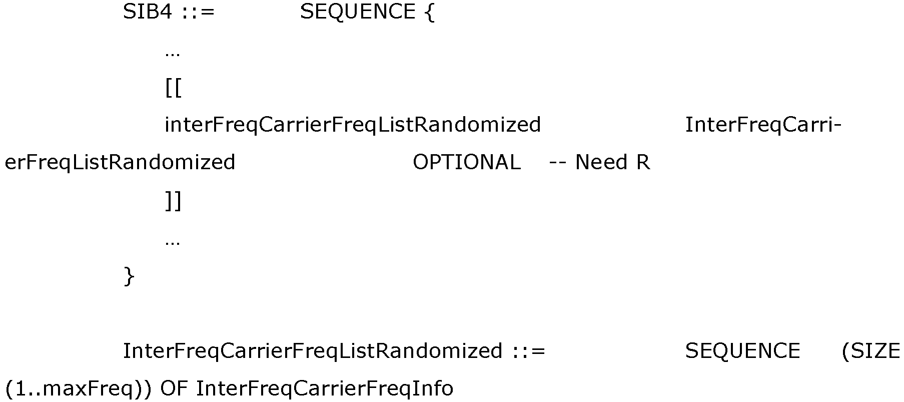 where interFreqCarri-erFreqListRandomized is a list of neighbouring carrier frequencies for which UE shall use randomization for priority-based access.

At operation S3.4, the terminal device 310 stores the randomization parameters. For instance, one or more of the randomization parameters stored at the terminal device 310 can be received from the network node 320 during the connected mode, as described in relation to operation S3.1 (e.g., via an RRC release message) and/or during the IDLE or INACTIVE mode as described in relation to operation S3.3 (e.g., via a SIB broadcast). Additionally or alternatively, one or more of the randomization parameters stored at the terminal device 310 can be received in other manners, including, for instance, during a prior instance of a CONNECTED mode with the network node 320 or another network node 322, or during a prior instance of an IDLE or INACTIVE mode with the network node 320 or another network node 322. Additionally or alternatively, one or more of the randomization parameters stored at the terminal device 310 can be stored without having been received from the network node 320 or another network node 322. For instance, one or more of the randomization parameters stored at the terminal device 310 can be default values stored by the terminal device 310 (e.g., which can be used when a corresponding value has not been provided to the terminal device 310 by a network node) and/or can be determined by the terminal device 310 based on one or decisions or measurements performed by the terminal device 310.

In this case, the stored randomization parameters can include a number of sets of randomization parameters, each being associated with a corresponding particular time period, or some other indication of a time period for which the terminal device 310 should perform the randomization procedure. For instance, a first set of randomization parameters can be associated with a time period of 1400 to 1900, a second set of randomization parameters can be associated with a time period of 1900 to 2200, a third set of randomization parameters can be associated with a time period of 2200 to 0200, and there may be no set of randomization parameters associated with a time period of 0200 to 1400. In this way, as described herein, the terminal device can be caused to perform the randomization procedure only during particular time period(s), and/or with randomization parameters corresponding to the particular times period(s).

At operation S3.5, the terminal device 310 evaluates cell reselection. Based on the evaluation, the terminal device 310 can select a carrier frequency with which to perform cell reselection.

Since, in this case, the terminal device 310 may be configured for time-dependent activation of randomized cell reselection, the terminal device 310 can determine whether a current time is within a particular time period associated with a corresponding set of randomization parameters. If the terminal device 310 determines that a current time is within a particular time period associated with a corresponding set of randomization parameters, the terminal device 310 can determine to perform a randomization procedure and/or to perform the randomization procedure with the corresponding set of randomization parameters. For instance, absent a corresponding set of randomization parameters for the current time, the terminal device 310 may determine to refrain from performing the randomization procedure. As another example, absent a corresponding set of randomization parameters for the current time, the terminal device 310 may still determine to perform the randomization procedure, but with another set of randomization parameters (e.g., a default set of randomization procedures). Based on finding a set of randomization parameters that are associated with a current time, the terminal device 310 can proceed to evaluate cell reselection based at least in part on this set of randomization parameters.

Moreover, the terminal device 310 can obtain one or more absolute cell reselection priorities (otherwise called absolute priorities, or priorities) for the carrier frequencies being evaluated. For instance, the absolute cell reselection priorities can be received in an RRC message (such as an RRC Release message as described in relation to operation S3.2), in a SIB broadcast (such as a SIB broadcast as described in relation to operation S3.3), by inheriting from another cell reselection (e.g., another RAT at inter-RAT cell selection or reselection). As an example, an absolute cell reselection priority can be indicated in a corresponding parameter (e.g., a cellReselectionPriority parameter) for each carrier frequency supported by the network node 320.

The terminal device 310 can evaluate some or all of the carrier frequencies supported by the network node 320 (and/or another network node 322). For instance, in some implementations, the terminal device 310 can be configured (e.g., by the randomization parameters received from the network node 320) to evaluate all available carrier frequencies. In some implementations, the terminal device 310 can be configured to evaluate specific indicated carrier frequencies (e.g., indicated in the randomization parameters). In some implementations, the terminal device 310 can be configured to evaluate only carrier frequencies that support LP-WUS (e.g., based on an indication of the carrier frequencies or frequency bands to evaluate included in the randomization parameters, based on an indication to evaluate only carrier frequencies or frequency bands that support LP-WUS, etc.,). As described herein, depending on the randomization procedure being applied, the terminal device 310 can evaluate the carrier frequencies based on the randomization parameters, and in some cases, the corresponding absolute cell reselection priorities.

At operation S3.6, the terminal device 310 performs cell reselection with the carrier frequency (e.g., on a corresponding frequency band) selected at operation S3.5.

The terminal device 310 can perform one or more of operations S3.3 to S3.6 whilst in the IDLE or INACTIVE mode (e.g., corresponding to the indication in the RRC release message received in operation S3.1).

In FIG.3, it is generally described that the randomization procedure can be configured by the network node 320. However, in some implementations, the terminal device itself can determine one or more aspects of the randomization procedure. For instance, the terminal device could, itself, determine randomization parameters such as the use and/or configuration of timestamp based randomization, the selection other types of random seed, the randomization procedure being applied (e.g., use of probabilities, relative weights, absolute cell reselection priority offsets, etc.,), when to use randomization for cell reselection, which randomization parameters to use (e.g., whether to disregard randomization parameters provided by the network node and instead use other randomization parameters), etc.

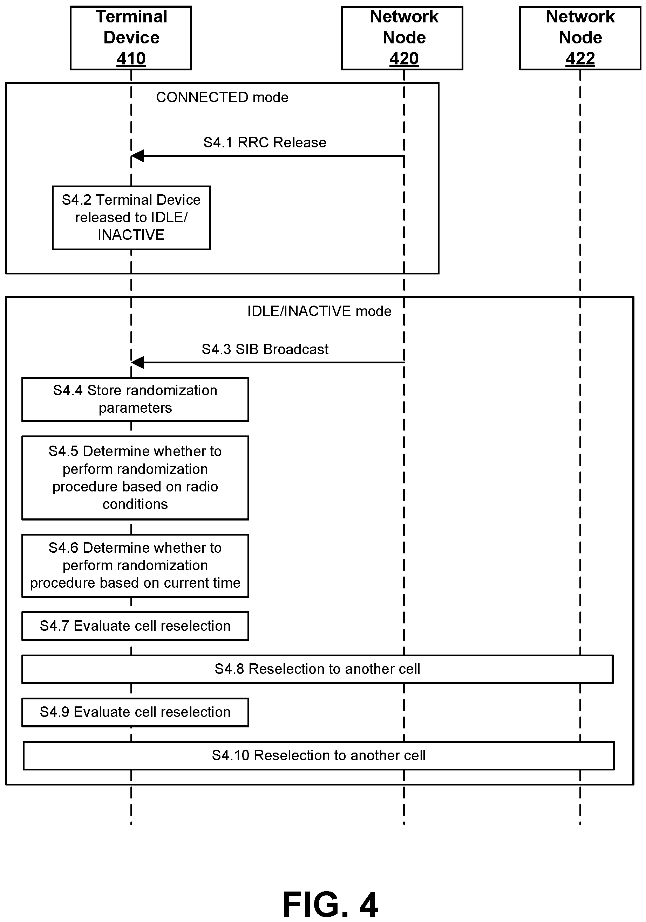

For instance, turning to FIG. 4, a message flow sequence of an example method for cell reselection is depicted. One or more of the operations depicted in FIG. 4 can be performed by a terminal device 410, which can be the same or similar to any terminal device as described herein (such as terminal device 120 or terminal device 122 in FIG. 1, terminal device 210 of FIG. 2A and FIG. 2B, terminal device 310 of FIG. 3, etc.,). Furthermore, one or more of the operations depicted in FIG. 4 can be performed by a first network node 420 or a second network node 422, which can be the same or similar to any network node described herein (e.g., such as network node 110 or network node 112 in FIG. 1, network node 320 or 322 of FIG. 3, etc.,). For instance, the message flow sequence of FIG. 4 can be performed by one or more entities of a communication system similar to the communication system described in relation to FIG. 1.

The example method of FIG. 4 may be viewed as a variant of the method of FIG. 3, in which the terminal device 410 can make one or more additional decisions and operate accordingly. In other words, operations S4.1, S4.2, S4.3, S4.4, S4.7, and S4.8 of FIG. 4 may correspond to operations S3.1 to S3.6 already described in relation to FIG.3, and will not be detailed again here for the sake of brevity.

At operation S4.5, the terminal device 410 determines whether to perform a randomization procedure for cell reselection based on radio conditions. For instance, the terminal device 410 can make one or measurements of radio conditions between the terminal device 410 and the serving cell (e.g., as provided by network node 420, or another network node 422). The measurements can include, for instance, one or more of a measurement of serving cell reference signal receive power (SS-RSRP), serving cell reference signal receive quality (SS-RSRQ), signal to interference plus noise ratio (SINR), etc. If the terminal device 410 determines that the radio conditions are "good" (e.g., when a measurement of the radio conditions are above a threshold measurement), the terminal device 410 can make a determination to perform a randomization procedure for cell reselection (or at least to proceed with a randomization procedure if configured by the network node 420). Additionally or alternatively, if the terminal device 410 determines that the radio conditions are "bad" (e.g., when a measurement of the radio conditions are below a threshold measurement, which may or may not be the same as the threshold measurement used to determine "good" radio conditions), the terminal device 410 can make a determination to not perform a randomization procedure for cell reselection (e.g., and to ignore any indication to do so from the network node 420). In this way, the likelihood of overloading a carrier frequency can be reduced, whilst also ensuring that the terminal device 410 will maintain a minimum level of service quality. It will be appreciated that operation S4.5 can be performed at any time during the method of FIG. 4.

At operation S4.6, the terminal device 410 determines whether to perform a randomization procedure based on a current time. For instance, as already described in relation to FIG.3, the randomization parameters received from the network node 420 can include sets of randomization parameters that are associated with corresponding time periods and/or other indications of time periods in which to perform a randomization procedure for cell reselection. However, the terminal device 410 can also make decisions about whether to perform a randomization procedure and/or which randomization parameters to use, e.g., based on time periods that are not associated with any sets of randomization parameters received from the network node 420.

As one example, the terminal device 410 can determine to always perform a randomization procedure (e.g., at any time, regardless if there is no corresponding set of randomization parameters associated with that time). As another example, the terminal device 410 can determine to perform a randomization procedure at specific time periods in addition to the time periods associated with corresponding randomization parameters (or otherwise indicated by the randomization parameters). As another example, the terminal device 410 may compare a time other than the current time to the time periods indicated by the randomization parameters.

In some implementations, the terminal device 410 may make an ultimate decision as to whether to perform a randomization procedure and/or which randomization parameters to use based on a combination of the determinations mentioned in relation to operations S4.5, and S4.6. For instance, the terminal device 410 can determine to perform a randomization procedure whenever both the terminal device 410 is in a "good" radio condition, and the terminal device 410 determines that a current time is within a terminal device 410 defined time period (e.g., as opposed to a time period indicated in the randomization parameters received from the network device 420).

If, at operation S4.5 and/or operation S4.6, the terminal device 410 makes a determination to perform a randomization procedure, the terminal device 410 can proceed to operation S4.7, which corresponds with operation S3.5 of FIG. 3. On the other hand, if, at operation S4.5 and/or operation S4.6, the terminal device 410 makes a determination not to perform a randomization procedure, the terminal device 410 can determine to refrain from performing operations S4.7 and S4.8, and instead proceed to operation S4.9.

In some implementations, if the terminal device 410 determines that a carrier frequency with an absolute cell reselection priority below a threshold absolute cell reselection priority and/or below an absolute cell reselection priority of a currently serving cell would be selected for cell reselection when using a randomization procedure (e.g., at an iteration of operation S4.7), the terminal device 410 may determine to proceed to perform cell reselection (e.g., including an additional cell reselection evaluation) without a randomization procedure. In these instances, the terminal device 410 can proceed to operation S4.9. Otherwise, the method of FIG. 4 can be concluded, with the terminal device 410 proceeding with cell reselection at operation S4.8 with the carrier frequency selected at operation S4.8.

At operation S4.9, the terminal device 410 evaluates cell reselection, without use of the randomization procedure. In other words, the terminal device 410 can evaluate cell reselection based on the absolute cell reselection priorities (e.g., by determining the carrier frequency with the highest absolute cell reselection priority), and without being based on any randomization parameters. Based on the evaluation, the terminal device 410 can select a carrier frequency with which to perform cell reselection.

At operation S4.10, the terminal device 410 performs cell reselection with the carrier frequency selected at operation S4.9.

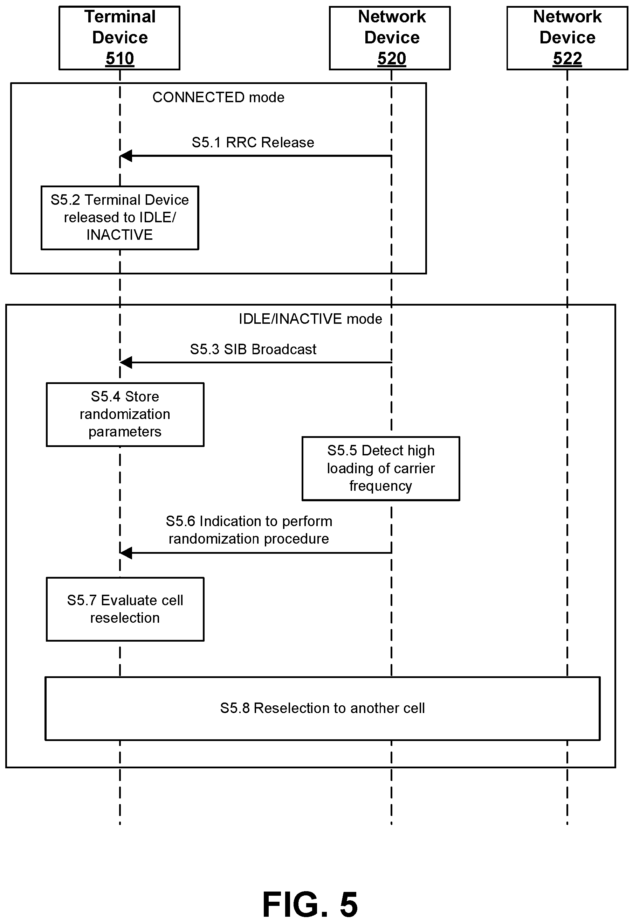

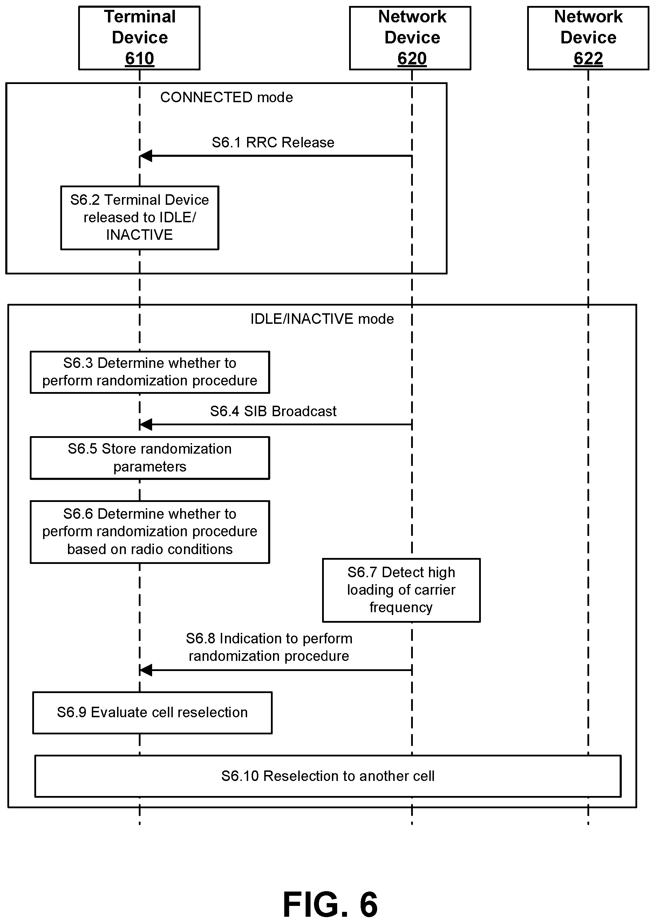

Although time-dependent activated randomization of cell reselection has been generally described in relation to FIG. 3 and FIG. 4, it will be appreciated that the techniques described herein are not limited to this, and any suitable form of activation for the randomization of cell reselection can be used. For instance, in some implementations, a terminal device can be explicitly indicated by a network node to activate randomized cell reselection. This can be referred to as explicit network activation of randomized cell reselection, as described in more detail in FIG. 5, and FIG. 6.

Turning to FIG. 5, a message flow sequence of an example method for cell reselection (e.g., explicit network activation of randomized cell reselection) is depicted. One or more of the operations depicted in FIG. 5 can be performed by a terminal device 510, which can be the same or similar to any terminal device as described herein (such as terminal device 120 or terminal device 122 in FIG. 1, terminal device 210 of FIG. 2A and FIG. 2B, terminal device 410 of FIG. 4, terminal device 510 of FIG. 5, etc). Furthermore, one or more of the operations depicted in FIG. 5 can be performed by a first network node 520 or a second network node 522, which can be the same or similar to any network node described herein (e.g., such as network node 110 or network node 112 in FIG. 1, network node 320 or 322 of FIG. 3, network node 420 or 422 of FIG 4, etc.,). For instance, the message flow sequence of FIG. 5 can be performed by one or more entities of a communication system similar to the communication system described in relation to FIG. 1. Many of the operations of FIG. 5 may be the same or similar to those of FIG. 3, and the details of which will not be repeated here for the sake of brevity.

At operation S5.1, the network node 520 sends a radio resource control (RRC) release message to the terminal device 510. The terminal device 510 can correspondingly receive the RRC release message. Operation S5.1 may correspond in many ways to operation S3.1 of FIG. 3.

At operation S5.2, after having received the RRC release message, the terminal device 510 is released to an IDLE or INACTIVE mode (e.g., corresponding to the indication in the RRC release message). Operation S5.2 may correspond in many ways to operation S3.2.

At operation S5.3, the network node 520 transmits a system information block (SIB) broadcast, which is correspondingly received by the terminal device 510. Operation S5.3 may correspond in many ways to operation S3.3.

At operation S5.4, the terminal device 510 stores the randomization parameters. Operation S5.4 may correspond in many ways to operation S3.4. However, in this case, there may be no indicated time periods for randomization provided in the randomization parameters (e.g., by associations to sets of randomization parameters, etc.,).

At operation S5.5, the network node 520 can detect that one or more carrier frequencies have a high loading (e.g., a loading that is higher than a threshold loading). The loading can be determined, for instance, based on the number of terminal devices connected on a particular carrier frequency (or cell), an amount of data being sent over the carrier frequency, a number of uplink (UL) accesses (e.g., UL Random Access Channel (RACH)), a number of UL Buffer Status Requests to request transmission of UL data, etc. The carrier frequencies being monitored may be carrier frequencies with a high absolute cell reselection priority (e.g., the carrier frequencies with the highest absolute cell reselection priority or priorities, carrier frequencies with an absolute cell reselection priority above a threshold absolute cell reselection priority, etc.,). For instance, the carrier frequencies being monitored may be carrier frequencies that support LP-WUS.

At operation S5.6, the network node 520 transmits an indication to the terminal device 510 to cause the terminal device 510 to perform randomization procedure, which is correspondingly received by the terminal device 510. The indication to cause the terminal device 510 can, for instance, be referred to as an explicit network activation signal. In some implementations, the explicit network activation signal can indicate to the terminal device 510 that a high loading of one or more carrier frequencies has been detected (e.g., at operation S5.5). Responsive to receiving the explicit network activation signal, the terminal device 510 can perform any subsequent cell reselection (e.g., cell reselection evaluation) using a randomization procedure (e.g., according to the stored randomization parameters), or at least until a further indication to refrain from performing the randomization procedure is received (e.g., an explicit network deactivation signal).

The explicit network activation signal can be provided in a SIB broadcast (e.g., a SIB1 broadcast), including, for instance, the SIB broadcast transmitted at operation S5.3. For instance, the explicit network activation signal can be provided by indicating a value of a corresponding parameter. As an example, the parameter "randomizedPriorityAccess" can be set to "true", as shown below: 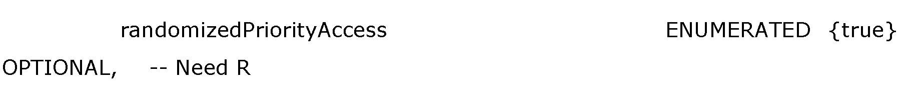 where, if the field is set to true and the terminal device 510 supports randomization of priority-based access of carrier frequencies, the terminal device 510 shall start applying the procedure for randomization of priority-based access for cell reselection. Similarly, if the field is set to false, the terminal device 510 can stop applying the procedure for randomization of priority-based access for cell reselection.

At operation S5.7, the terminal device 510 evaluates cell reselection. Based on the evaluation, the terminal device 510 can select a carrier frequency with which to perform cell reselection. Operation S5.7 may correspond in many ways to operation S3.5. However, since in this case an explicit network activation signal has been received from the network node 520 (e.g., at operation S5.6), the terminal device may be configured to proceed with a randomization procedure (e.g., according to the stored randomization parameters). This may be the case regardless of the presence or not of any indicated time periods in the randomization parameters.

At operation S5.8, the terminal device 510 performs cell reselection with the carrier frequency selected at operation S5.7. Operation S5.6 may correspond to operation S3.6 of FIG. 3.

Similarly as has been described in relation to FIG. 4, in some implementations, the terminal device itself can determine one or more aspects of the randomization procedure. For instance, the terminal device could, itself, determine randomization parameters such as the use and/or configuration of timestamp based randomization, the selection other types of random seed, the randomization procedure being applied (e.g., use of probabilities, relative weights, absolute cell reselection priority offsets, etc.,), when to use randomization for cell reselection, which randomization parameters to use (e.g., whether to disregard randomization parameters provided by the network node and instead use other randomization parameters), etc.

For instance, turning now to FIG. 6, a message flow sequence of an example method for cell reselection is depicted. One or more of the operations depicted in FIG. 6 can be performed by a terminal device 610, which can be the same or similar to any terminal device as described herein (such as terminal device 120 or terminal device 122 in FIG. 1, terminal device 210 of FIG. 2A and FIG. 2B, terminal device 310 of FIG. 3, terminal device 410 of FIG. 4, terminal device 510 of FIG. 5, etc.,). Furthermore, one or more of the operations depicted in FIG. 6 can be performed by a first network node 620 or a second network node 622, which can be the same or similar to any network node described herein (e.g., such as network node 110 or network node 112 in FIG. 1, network node 320 or 322 of FIG. 3, network node 420 or 422 of FIG. 4, network node 520 or 522 of FIG, 5, etc.,). For instance, the message flow sequence of FIG. 6 can be performed by one or more entities of a communication system similar to the communication system described in relation to FIG. 1.

The example method of FIG. 6 may be viewed as a variant of the method of FIG. 5, in which the terminal device 610 can make one or more additional decisions and operate accordingly. In other words, operations S6.1, S6.2, S6.4, S6.5, S6.7, S6.8, S6.9, and S6.10 of FIG. 6 may correspond to operations S5.1 to S5.8 already described in relation to FIG.5, and will not be detailed again here for the sake of brevity.

At operation S6.3, the terminal device 610 determines whether to perform a randomization procedure for cell reselection. For instance, the terminal device 610 can determine to always perform a randomization procedure (e.g., even without having received an indication to do so, for instance, in an iteration of operation S6.8). As another example, the terminal device 610 can determine perform a randomization procedure based on having received randomization parameters from the network node 620 (e.g., at an instance of operation S6.1 and/or at an instance of operation S6.4), even without receiving an explicit indication to do so (e.g., at an instance of operation S6.8).

At operation S6.6, the terminal device 610 determines whether to perform a randomization procedure for cell reselection based on radio conditions. Operation S6.6 may correspond in many ways to operation S4.5 of FIG. 4.

In some implementations, the terminal device 610 may make an ultimate decision as to whether to perform a randomization procedure and/or which randomization parameters to use based on a combination of the determinations mentioned in relation to operations S6.3, and S6.6. For instance, the terminal device 610 can determine to perform a randomization procedure whenever both the terminal device 610 is in a "good" radio condition, and the terminal device 610 has received randomization parameters from the network node 620 (e.g., even if an explicit indication to use a randomization procedure has not been provided by the network node 620).

If, at operation S6.3 and/or operation S6.6, the terminal device 610 makes a determination to perform a randomization procedure, the terminal device 610 can proceed to operation S6.9, which may largely correspond with operation S4.7 of FIG. 4. On the other hand, if, at operation S6.3 and/or operation S6.6, the terminal device 610 makes a determination not to perform a randomization procedure, the terminal device 610 can determine to refrain from performing operations S6.9 and S6.10, and instead perform cell reselection (e.g., cell reselection evaluation) without a randomization procedure (e.g., in an operation (not depicted in FIG. 6) which may largely correspond to operation S4.9 of FIG.4).

In some implementations, if the terminal device 610 determines that a carrier frequency with an absolute cell reselection priority below a threshold absolute cell reselection priority and/or below an absolute cell reselection priority of a currently serving cell would be selected for cell reselection when using a randomization procedure (e.g., at an iteration of operation S6.9), the terminal device 610 may determine to proceed to perform cell reselection (e.g., including an additional cell reselection evaluation) without a randomization procedure (e.g., in an operation (not depicted in FIG. 6) which may largely correspond to operation S4.9 of FIG.4). Otherwise, the method of FIG. 6 can be concluded, with the terminal device 610 proceeding with cell reselection at operation S6.10 with the carrier frequency selected at operation S6.9.

For instance, if the terminal device 610 determines to not perform a randomization procedure and/or determines that a carrier frequency with an absolute cell reselection priority below a threshold absolute cell reselection priority and/or below an absolute cell reselection priority of a currently serving cell would be selected for cell reselection when using a randomization procedure (e.g., at an iteration of operation S6.9), the terminal device 610 can evaluate cell reselection, without use of the randomization procedure. In other words, the terminal device 610 can evaluate cell reselection based on the absolute cell reselection priorities (e.g., by determining the carrier frequency with the highest absolute cell reselection priority), and without being based on any randomization parameters. Based on the evaluation, the terminal device 610 can select a carrier frequency with which to perform cell reselection. The terminal device 610 can then perform cell reselection with the selected carrier frequency.

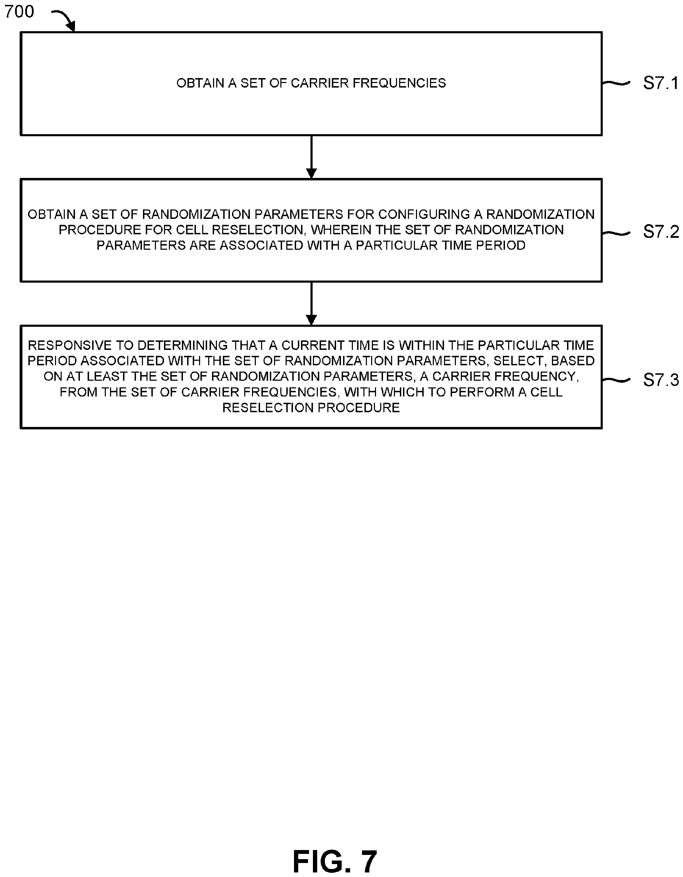

Turning now to FIG. 7, a flow diagram depicting a method 700 in accordance with example embodiments is depicted. The method may be performed by a terminal device, such as any of the terminal devices described herein (e.g., terminal devices 120 or 122 of FIG. 1, terminal device 210 of FIGS. 2A and 2B, terminal device 310 of FIG. 3, etc.,).

At operation S7.1, the method 700 includes obtaining a set of carrier frequencies. The set of carrier frequencies can, for instance, include all carrier frequencies available for the terminal device, a subset thereof, etc. For instance, the set of carrier frequencies can include all available carrier frequencies that support LP WUS, or a subset thereof.

At operation S7.2, the method 700 includes obtaining a set of randomization parameters for configuring a randomization procedure for cell reselection, wherein the set of randomization parameters are associated with a particular time period. Obtaining the set of randomization parameters can, for instance, include receiving, from a network node, the set of randomization parameters. In some implementations, at least some of the set of randomization parameters are received via one or more of a system information block (SIB) broadcast, a radio resource control (RRC) connection release message, and dedicated signalling.

In some implementations, the set of randomization parameters can include an indication to include the set of carrier frequencies (e.g., all of the carrier frequencies) in the randomization procedure. The selected carrier frequency can then be selected from the set of carrier frequencies. Additionally or alternatively, the set of randomization parameters can include an indication to include a subset of the set of carrier frequencies in the randomization procedure. The selected carrier frequency can then be selected from the subset of carrier frequencies. Additionally or alternatively, the set of randomization parameters can include an indication of the specific carrier frequencies to be included in the randomization procedure. The selected carrier frequency can then be selected from the specific carrier frequencies to be included in the randomization procedure. Additionally or alternatively, the set of randomization parameters can include offsets for absolute cell reselection priorities corresponding to at least some of the set of carrier frequencies. Additionally or alternatively, the set of randomization parameters can include an indication to only include carrier frequencies that support low-power wake-up signalling (LP WUS) in the randomization procedure. The selected carrier frequency can then be selected from the carrier frequencies that support LP WUS.

At operation S7.3, the method 700 includes, responsive to determining that a current time is within the particular time period associated with the set of randomization parameters, selecting, based on at least the set of randomization parameters, a carrier frequency, from the set of carrier frequencies, with which to perform a cell reselection procedure.

In some implementations, selecting the carrier frequency with which to perform a cell reselection procedure can include selecting, using the randomization procedure and based on the set of randomization parameters, a subset of the carrier frequencies. A carrier frequency, from the subset of the carrier frequencies, which is associated with a highest absolute cell reselection priority can then be selected as the carrier frequency with which to perform the cell reselection procedure.

In some implementations, selecting the carrier frequency with which to perform a cell reselection procedure includes selecting, based on the set of randomization parameters, a carrier frequency, from the set of the carrier frequencies, as the carrier frequency with which to perform the cell reselection procedure.

In some implementations, selecting the carrier frequency with which to perform a cell reselection procedure includes modifying, using the randomization procedure and based on the set of randomization parameters, a set of absolute cell reselection priorities corresponding to the set of carrier frequencies to determine a modified set of absolute cell reselection priorities for the set of carrier frequencies. A carrier frequency, from the set of the carrier frequencies, which is associated with the highest modified absolute cell reselection priority can then be selected as the carrier frequency with which to perform the cell reselection procedure.

In some implementations, selecting the carrier frequency with which to perform a cell reselection procedure includes determining a timestamp corresponding to the current time, and using one or more components of the timestamp as a seed value for the randomization procedure. The set of randomization parameters can, for instance, include an indication of the one or more components to be used as the seed.

In some implementations, selecting the carrier frequency with which to perform a cell reselection procedure is further based on terminal device specific parameters. The terminal device specific parameters can include, for instance, at least one of an indication of a capability of the terminal device, or an identifier associated with the terminal device.

In some implementations, the set of randomization parameters can include an indication of corresponding probabilities for at least some of the set of carrier frequencies. Selecting the carrier frequency with which to perform a cell reselection procedure can then be based on the corresponding probabilities. For instance, the indication of the corresponding probabilities can indicate a first probability for a first type of carrier frequency, and a second probability for a second type of carrier frequency. The first type of carrier frequency can, for instance, be carrier frequencies that support LP WUS, and the second type of carrier frequency can, for instance, be carrier frequencies that do not support LP WUS.

In some implementations, the set of randomization parameters can include an indication of corresponding relative weights for at least some of the set of carrier frequencies. Selecting the carrier frequency with which to perform a cell reselection procedure can then be based on the corresponding relative weights. For instance, the indication of the corresponding relative weights can indicate a first relative weight for a first type of carrier frequency, and a second relative weight for a second type of carrier frequency, where, for example, the first type of carrier frequency supports LP WUS, and the second type of carrier frequency does not support LP WUS.

In some implementations, the method 700 can further include obtaining corresponding offsets for absolute cell reselection priorities for at least some of the set of carrier frequencies. Selecting the carrier frequency with which to perform a cell reselection procedure can then be based at least in part on applying the corresponding offsets to corresponding absolute cell reselection priorities. Obtaining the offsets can, for instance, include determining the offsets based on a further randomization procedure for determining the offsets. Additionally or alternatively, obtaining the offsets can include determining carrier frequencies of the set of carrier frequencies with which to apply a corresponding offset based on a further randomization procedure for determining the carrier frequencies with which to apply a corresponding offset. Corresponding offsets for the determined carrier frequencies with which to apply a corresponding offset can then be obtained.

In some implementations, selecting the carrier frequency with which to perform a cell reselection procedure can include modifying corresponding absolute cell reselection priorities for the set of carrier frequencies based on applying the corresponding offsets to determine corresponding modified absolute cell reselection priorities for at least some of the carrier frequencies. The carrier frequency with a highest modified absolute cell reselection priority can then be selected as the carrier frequency with which to perform a cell reselection procedure.

In some implementations, the method 700 can further include determining which carrier frequencies of the set of carrier frequencies support LP WUS (e.g., if instructed to by the randomization parameters). The selected carrier frequency can then be selected from the set of carrier frequencies that support LP WUS. Additionally or alternatively, the method 700 can include determining, based on determining which carrier frequencies of the set of carrier frequencies support LP WUS, a subset of the set of carrier frequencies (e.g., a subset of the carrier frequencies that support LP WUS). The selected carrier frequency can then be selected from the subset of carrier frequencies.

In some implementations, more than one set of randomization parameters can be obtained, each associated with a corresponding time period during which a randomization procedure should be performed using that corresponding set of randomization parameters. For instance, a first set of randomization parameters can be associated with a first particular time period, and a second set of randomization parameters can be associated with a second particular time period. Accordingly, the method 700 can include, responsive to determining that the current time is within the second particular time period associated with the second set of randomization parameters, selecting, based on at least the second set of randomization parameters, a carrier frequency, from the set of carrier frequencies, with which to perform a cell reselection procedure. In some implementations, the set of randomization parameters can be associated with more than one time period, such that the randomization procedure can be performed using the set of randomization parameters during any of these time periods.

In some implementations, there may be periods of time which are not associated with any set of randomization parameters. For instance, the method 700 can include, responsive to determining that the current time is not within the particular time period, selecting, without using the randomization procedure (or, in other words, without being based on the randomization parameters), a carrier frequency, from the set of carrier frequencies, with which to perform a cell reselection procedure.

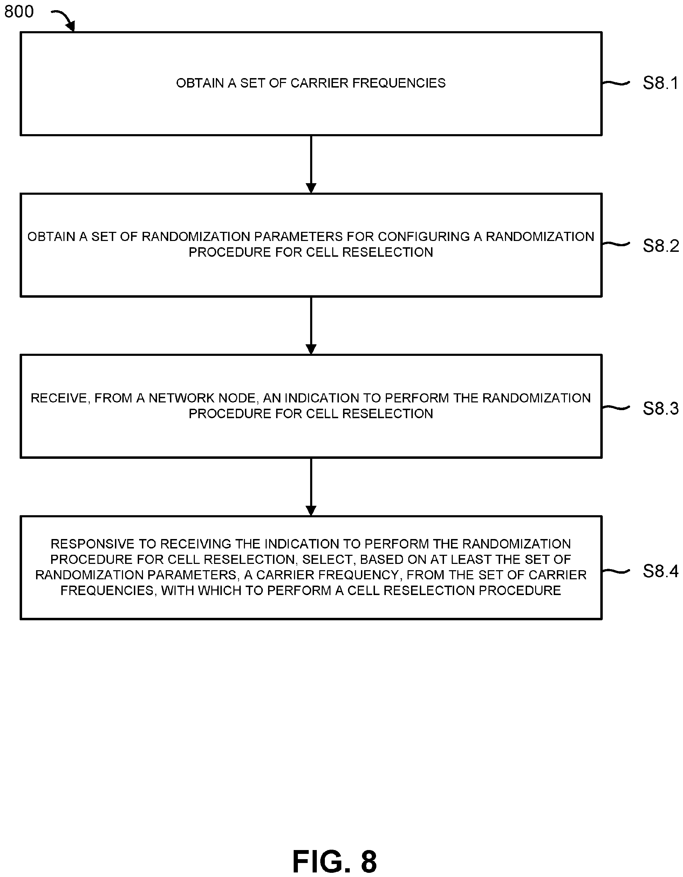

Turning now to FIG. 8, a flow diagram depicting a method 800 in accordance with example embodiments is depicted. The method may be performed by a terminal device, such as any of the terminal devices described herein (e.g., terminal devices 120 or 122 of FIG. 1, terminal device 210 of FIGS. 2A and 2B, terminal device 510 of FIG. 5, etc.,). In some implementations, the method 800 can include one or more of the additional operations described in relation to method 700 of FIG. 7.

At operation S8.1, the method 800 includes obtaining a set of carrier frequencies. Operation S8.1 may, in many respects, correspond to operation S7.1.

At operation S8.2, the method 800 includes obtaining a set of randomization parameters for configuring a randomization procedure for cell reselection. Operation S8.2 may, in many respects, correspond to operation S7.2.

At operation S8.3, the method includes receiving, from a network node, an indication to perform the randomization procedure for cell reselection. For instance, the indication to perform the randomization procedure for cell reselection can be received via a system information block (SIB) broadcast. In some implementations, the indication to perform the randomization procedure for cell reselection can be received after a determination is made that a loading of one or more carrier frequencies from the set of carrier frequencies is greater than a threshold loading.

At operation S8.4, the method includes responsive to receiving the indication to perform the randomization procedure for cell reselection, selecting, based on at least the set of randomization parameters, a carrier frequency, from the set of carrier frequencies, with which to perform a cell reselection procedure. Operation S8.4 may, in many respects, correspond to operation S7.3.

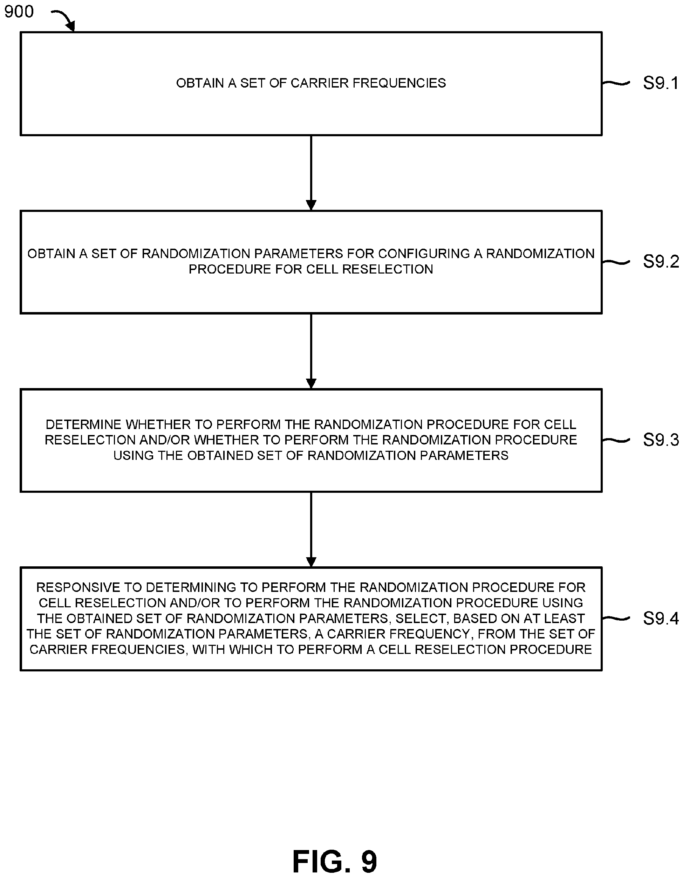

Turning now to FIG. 9, a flow diagram depicting a method 900 in accordance with example embodiments is depicted. The method may be performed by a terminal device, such as any of the terminal devices described herein (e.g., terminal devices 120 or 122 of FIG. 1, terminal device 210 of FIGS. 2A and 2B, terminal device 410 of FIG. 4, terminal device 610 of FIG. 6, etc.,). In some implementations, the method 900 can include one or more of the additional operations described in relation to method 700 of FIG. 7.

At operation S9.1, the method 900 includes obtaining a set of carrier frequencies. Operation S9.1 may, in many respects, correspond to operation S7.1 and/or operation S8.1.

At operation S9.2, the method 900 includes obtaining a set of randomization parameters for configuring a randomization procedure for cell reselection. Operation S9.2 may, in many respects, correspond to operation S7.2 and/or operation S8.2.

At operation S9.3, the method 900 includes determining whether to perform the randomization procedure for cell reselection and/or whether to perform the randomization procedure using the obtained set of randomization parameters.

In some implementations, obtaining the set of randomization parameters for configuring the randomization procedure for cell reselection can include receiving the set of randomization parameters from a network node. Determining whether to perform the randomization procedure for cell reselection and/or whether to perform the randomization procedure using the obtained set of randomization parameters can then include, responsive to determining that the set of randomization parameters have been received from the network node, determining to perform the randomization procedure for cell reselection.

In some implementations, determining whether to perform the randomization procedure for cell reselection and/or whether to perform the randomization procedure using the obtained set of randomization parameters can include determining to perform the randomization procedure for cell reselection without determining that a current time is within a particular time period associated with the set of randomization parameters (e.g., regardless of whether a particular time period is indicated in the set of randomization parameters).

In some implementations, determining whether to perform the randomization procedure for cell reselection and/or whether to perform the randomization procedure using the obtained set of randomization parameters can include determining to perform the randomization procedure for cell reselection without determining that an indication to perform the randomization procedure for cell reselection has been received.

In some implementations, determining whether to perform the randomization procedure for cell reselection and/or whether to perform the randomization procedure using the obtained set of randomization parameters can include, responsive to determining that a measurement of a wireless connection between the terminal device and a serving cell is above a first threshold measurement (e.g., that the radio conditions are "good"), determining to perform the randomization procedure for cell reselection. Additionally or alternatively, determining whether to perform the randomization procedure for cell reselection and/or whether to perform the randomization procedure using the obtained set of randomization parameters can include, responsive to determining that a measurement of a wireless connection between the terminal device and a serving cell is below a second threshold measurement (e.g., that the radio conditions are "bad"), determining not to perform the randomization procedure for cell reselection. The first threshold measurement and the second threshold measurement can be the same or different.

At operation S9.4, the method 900 includes responsive to determining to perform the randomization procedure for cell reselection and/or to perform the randomization procedure using the obtained set of randomization parameters, selecting, based on at least the set of randomization parameters, a carrier frequency, from the set of carrier frequencies, with which to perform a cell reselection procedure. Operation S9.4 may, in many respects, correspond to operation S7.3 and/or operation S8.4.

In some implementations, the method 900 further includes, responsive to determining that the selected carrier frequency is associated with an absolute cell reselection priority that is lower than an absolute cell reselection priority associated with a currently serving cell, selecting, based on a set of absolute cell reselection priorities corresponding to the set of carrier frequencies and without using the randomization procedure, a different carrier frequency, from the set of carrier frequencies, with which to perform a cell reselection procedure.

In some implementations, the method 900 can further include, responsive to determining not to perform the randomization procedure for cell reselection, selecting, based on a set of absolute cell reselection priorities corresponding to the set of carrier frequencies and without performing the randomization procedure, a carrier frequency, from the set of carrier frequencies, with which to perform a cell reselection procedure.

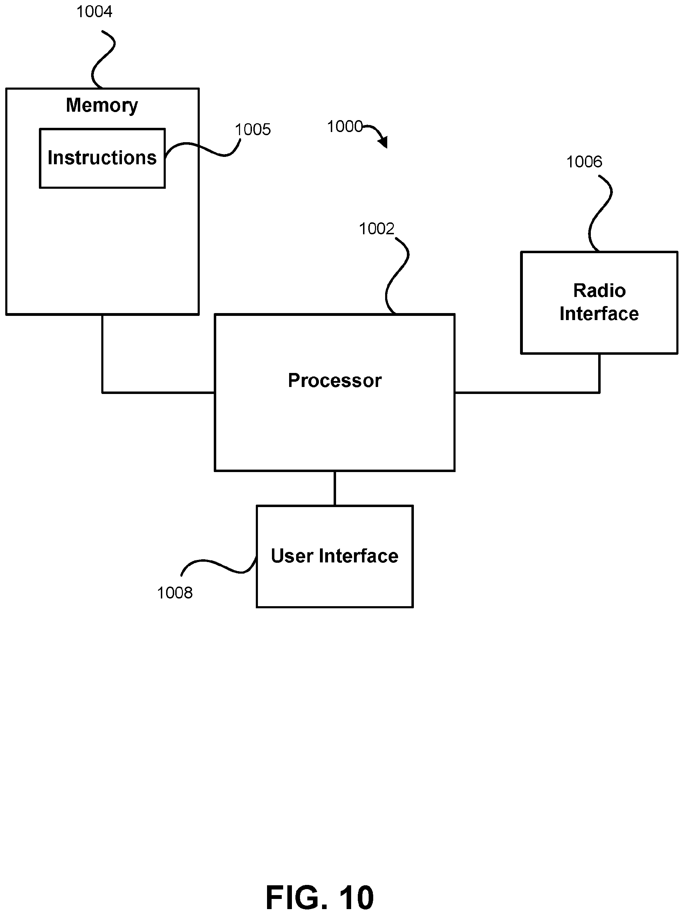

Turning now to FIG. 10, a block diagram of an apparatus 1000 is depicted, by way of example. The apparatus 1000 comprises, for example, at least one processor 1002 and at least one memory 1004 storing instructions 1005 that, when executed by the at least one processor, cause the apparatus 1000 at least to perform the method or methods as disclosed herein, and any of the embodiments thereof. In an example, the at least one memory and the instructions (e.g. a computer program code, software), are configured, with the at least one processor, to cause the apparatus 1000 to perform the method or methods as disclosed herein, and any of the embodiments thereof.

A processor 1002 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardwareonly circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 1004 may be implemented using any suitable data storage technology. The memory may comprise a database for storing data. The memory 1004 may be at least in part external to apparatus 1000 but accessible to apparatus 1000.

The instructions 1005 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 1000 is a terminal device, such as the terminal device of any one of FIGS. 1 to 9. As another example, the apparatus is comprised in such a terminal device, e.g. as a chipset configured to control the terminal device. As another example, the apparatus 1000 is a network node, e.g. the network node of any one of FIGS. 1 to 9. In another embodiment, the apparatus is comprised in such a network node, e.g. as a chipset configured to control the network node.

The apparatus 1000 may be caused or configured to perform at least the method of any one of FIGS. 7, 8, or 9 and/or any one or more of the embodiments described.

The apparatus 1000 may comprise one or more entities of any of protocol layers, such as a MAC entity, an RRC entity, an RLC entity, a PDCP entity or a PHY entity. In some embodiments, the entity is configured to perform at least the method of FIG. 7A to 9B, and/or any one or more of the embodiments described.

The apparatus 1000 comprises a radio interface 1006. The radio interface 1006 may provide the apparatus 1000 with communication capabilities. The radio interface 1006 may comprise a receiver configured to receive information in accordance with at least one cellular or non-cellular standard. The radio interface 1006 may comprise a transmitter configured to transmit information in accordance with at least one cellular or non-cellular standard. The receiver may comprise more than one receiver. The transmitter may comprise more than one transmitter. The radio interface 1006 may comprise a transceiver configured to receive and transmit information in accordance with at least one cellular or non-cellular standard. The transceiver may comprise more than one transceiver.

The apparatus 1000 may comprise a user interface 1008 comprising, for example, at least one of a keypad, a microphone, a touch display, a display, a speaker, etc. The user interface 1008 may be used to control the apparatus by the user. The user interface 1008 may be external to the apparatus 1000. For example, the apparatus 1000 may be connected to another device, such as a computer, either via wireless or wired connection, and the apparatus 1000 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 1000. For example, the at least one processor 1002, the memory 1004, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

This specification includes the following clauses:
1. A terminal device comprising:
   at least one processor; and
   at least one memory storing instructions that, when executed by the at least one processor, causes the terminal device to perform:
      obtaining a set of carrier frequencies;
      obtaining a set of randomization parameters for configuring a randomization procedure for cell reselection;
      determining whether to perform the randomization procedure for cell reselection and/or whether to perform the randomization procedure using the obtained set of randomization parameters; and
      responsive to determining to perform the randomization procedure for cell reselection and/or to perform the randomization procedure using the obtained set of randomization parameters, selecting, based on at least the set of randomization parameters, a carrier frequency, from the set of carrier frequencies, with which to perform a cell reselection procedure.
2. The terminal device of clause 1, wherein the selected carrier frequency with which to perform the cell reselection procedure is a first carrier frequency, and wherein the instructions further cause the terminal device to perform:
   responsive to determining that the first carrier frequency is associated with an absolute cell reselection priority that is lower than an absolute cell reselection priority associated with a currently serving cell, selecting, based on a set of absolute cell reselection priorities corresponding to the set of carrier frequencies and without using the randomization procedure, a carrier frequency, from the set of carrier frequencies, with which to perform a cell reselection procedure.
3. The terminal device of clause 1 or clause 2, wherein obtaining the set of randomization parameters for configuring the randomization procedure for cell reselection comprises:
   receiving the set of randomization parameters from a network node, and wherein determining whether to perform the randomization procedure for cell reselection and/or whether to perform the randomization procedure using the obtained set of randomization parameters comprises:
   responsive to determining that the set of randomization parameters have been received from the network node, determining to perform the randomization procedure for cell reselection.
4. The terminal device of any one of the preceding clauses, wherein determining whether to perform the randomization procedure for cell reselection and/or whether to perform the randomization procedure using the obtained set of randomization parameters comprises:
   determining to perform the randomization procedure for cell reselection without determining that a current time is within a particular time period associated with the set of randomization parameters.
5. The terminal device of any one of the preceding clauses, wherein determining whether to perform the randomization procedure for cell reselection and/or whether to perform the randomization procedure using the obtained set of randomization parameters comprises:
   determining to perform the randomization procedure for cell reselection without determining that an indication to perform the randomization procedure for cell reselection has been received.
6. The terminal device of any one of the preceding clauses, wherein determining whether to perform the randomization procedure for cell reselection and/or whether to perform the randomization procedure using the obtained set of randomization parameters comprises:
   responsive to determining that a measurement of a wireless connection between the terminal device and a serving cell is above a first threshold measurement, determining to perform the randomization procedure for cell reselection.
7. The terminal device of any one of the preceding clauses, wherein determining whether to perform the randomization procedure for cell reselection and/or whether to perform the randomization procedure using the obtained set of randomization parameters comprises:
   responsive to determining that a measurement of a wireless connection between the terminal device and a serving cell is below a second threshold measurement, determining not to perform the randomization procedure for cell reselection,
   wherein the instructions further cause the terminal device to perform:
      responsive to determining not to perform the randomization procedure for cell reselection, selecting, based on a set of absolute cell reselection priorities corresponding to the set of carrier frequencies and without performing the randomization procedure, a carrier frequency, from the set of carrier frequencies, with which to perform a cell reselection procedure.
8. The terminal device of any one of the preceding clauses, wherein selecting the carrier frequency with which to perform a cell reselection procedure comprises:
   selecting, using the randomization procedure and based on the set of randomization parameters, a subset of the carrier frequencies; and
   selecting a carrier frequency, from the subset of the carrier frequencies, which is associated with a highest absolute cell reselection priority as the carrier frequency with which to perform the cell reselection procedure.
9. The terminal device of any one of clauses 1 to 7, wherein selecting the carrier frequency with which to perform a cell reselection procedure comprises:
   selecting, based on the set of randomization parameters, a carrier frequency, from the set of the carrier frequencies, as the carrier frequency with which to perform the cell reselection procedure.
10. The terminal device of any one of clauses 1 to 7, wherein selecting the carrier frequency with which to perform a cell reselection procedure comprises:
   modifying, using the randomization procedure and based on the set of randomization parameters, a set of absolute cell reselection priorities corresponding to the set of carrier frequencies to determine a modified set of absolute cell reselection priorities for the set of carrier frequencies; and
   selecting a carrier frequency, from the set of the carrier frequencies, which is associated with the highest modified absolute cell reselection priority as the carrier frequency with which to perform the cell reselection procedure.
11. The terminal device of any one of the preceding clauses, wherein the set of randomization parameters comprises at least one of:
   an indication to include the set of carrier frequencies in the randomization procedure, wherein the selected carrier frequency is selected from the set of carrier frequencies,
   an indication to include a subset of the set of carrier frequencies in the randomization procedure, and wherein the selected carrier frequency is selected from the subset of carrier frequencies,
   an indication of the specific carrier frequencies to be included in the randomization procedure, wherein the selected carrier frequency is selected from the specific carrier frequencies to be included in the randomization procedure, and
   offsets for absolute cell reselection priorities corresponding to at least some of the set of carrier frequencies.
12. The terminal device of any one of the preceding clauses, wherein the set of randomization parameters comprises an indication to only include carrier frequencies that support low-power wake-up signalling (LP WUS) in the randomization procedure, and wherein the selected carrier frequency is selected from the carrier frequencies that support LP WUS.
13. The terminal device of any one of the preceding clauses, wherein the instructions further cause the terminal device to perform:
   determining which carrier frequencies of the set of carrier frequencies support LP WUS,
   wherein the selected carrier frequency is selected from the set of carrier frequencies that support LP WUS.
14. The terminal device of any one of the preceding clauses, wherein the instructions further cause the terminal device to perform:
   determining, based on determining which carrier frequencies of the set of carrier frequencies support LP WUS, a subset of the set of carrier frequencies,
   wherein the selected carrier frequency is selected from the subset of carrier frequencies.
15. The terminal device of any one of the preceding clauses, wherein selecting the carrier frequency with which to perform the cell reselection procedure, comprises:
   determining a timestamp corresponding to the current time; and
   using one or more components of the timestamp as a seed value for the randomization procedure.
16. The terminal device of clause 15, wherein the set of randomization parameters comprises an indication of the one or more components.
17. The terminal device of any one of the preceding clauses, wherein selecting the carrier frequency with which to perform a cell reselection procedure is further based on terminal device specific parameters.
18. The terminal device of clause 17, wherein the terminal device specific parameters comprise at least one of an indication of a capability of the terminal device, or an identifier associated with the terminal device.
19. The terminal device of any one of the preceding clauses, wherein the set of randomization parameters comprises an indication of corresponding probabilities for at least some of the set of carrier frequencies, wherein selecting the carrier frequency with which to perform a cell reselection procedure is based on the corresponding probabilities.
20. The terminal device of clause 19, wherein the indication of the corresponding probabilities indicates a first probability for a first type of carrier frequency, and a second probability for a second type of carrier frequency, wherein the first type of carrier frequency supports LP WUS, and the second type of carrier frequency does not support LP WUS.
21. The terminal device of any one of the preceding clauses, wherein the set of randomization parameters comprises an indication of corresponding relative weights for at least some of the set of carrier frequencies, wherein selecting the carrier frequency with which to perform a cell reselection procedure is based on the corresponding relative weights.
22. The terminal device of clause 21, wherein the indication of the corresponding relative weights indicates a first relative weight for a first type of carrier frequency, and a second relative weight for a second type of carrier frequency, wherein the first type of carrier frequency supports LP WUS, and the second type of carrier frequency does not support LP WUS.
23. The terminal device of any one of the preceding clauses, wherein the instructions further cause the terminal device to perform:
   obtaining corresponding offsets for absolute cell reselection priorities for at least some of the set of carrier frequencies, and
   wherein selecting the carrier frequency with which to perform a cell reselection procedure is based at least in part on applying the corresponding offsets to corresponding absolute cell reselection priorities.
24. The terminal device of clause 23, wherein obtaining the offsets comprises:
   determining the offsets based on a further randomization procedure for determining the offsets.
25. The terminal device of clause 23 or clause 24, wherein obtaining the offsets comprises:
   determining carrier frequencies of the set of carrier frequencies with which to apply a corresponding offset based on a further randomization procedure for determining the carrier frequencies with which to apply a corresponding offset; and
   obtaining corresponding offsets for the determined carrier frequencies with which to apply a corresponding offset.
26. The terminal device of any one of clauses 23 to 25, wherein selecting the carrier frequency with which to perform a cell reselection procedure comprises:
   modifying corresponding absolute cell reselection priorities for the set of carrier frequencies based on applying the corresponding offsets to determine corresponding modified absolute cell reselection priorities for at least some of the carrier frequencies; and
   selecting a carrier frequency with a highest modified absolute cell reselection priority as the carrier frequency with which to perform a cell reselection procedure.
27. The terminal device of any one of the preceding clauses, wherein obtaining the set of randomization parameters comprises:
   receiving, from a network node, the set of randomization parameters.
28. The terminal device of clause 27, wherein at least some of the set of randomization parameters are received via one or more of a system information block (SIB) broadcast, a radio resource control (RRC) connection release message, and dedicated signalling.
29. A method comprising:
   obtaining a set of carrier frequencies;
   obtaining a set of randomization parameters for configuring a randomization procedure for cell reselection;
   determining whether to perform the randomization procedure for cell reselection and/or whether to perform the randomization procedure using the obtained set of randomization parameters; and
   responsive to determining to perform the randomization procedure for cell reselection and/or to perform the randomization procedure using the obtained set of randomization parameters, selecting, based on at least the set of randomization parameters, a carrier frequency, from the set of carrier frequencies, with which to perform a cell reselection procedure.

## Claims

1. A terminal device comprising:
at least one processor; and
at least one memory storing instructions that, when executed by the at least one processor, causes the terminal device to perform:
obtaining a set of carrier frequencies;
obtaining a set of randomization parameters for configuring a randomization procedure for cell reselection;
determining whether to perform the randomization procedure for cell reselection and/or whether to perform the randomization procedure using the obtained set of randomization parameters; and
responsive to determining to perform the randomization procedure for cell reselection and/or to perform the randomization procedure using the obtained set of randomization parameters, selecting, based on at least the set of randomization parameters, a carrier frequency, from the set of carrier frequencies, with which to perform a cell reselection procedure.

2. The terminal device of claim 1, wherein the selected carrier frequency with which to perform the cell reselection procedure is a first carrier frequency, and wherein the instructions further cause the terminal device to perform:
responsive to determining that the first carrier frequency is associated with an absolute cell reselection priority that is lower than an absolute cell reselection priority associated with a currently serving cell, selecting, based on a set of absolute cell reselection priorities corresponding to the set of carrier frequencies and without using the randomization procedure, a carrier frequency, from the set of carrier frequencies, with which to perform a cell reselection procedure.

3. The terminal device of claim 1 or claim 2, wherein obtaining the set of randomization parameters for configuring the randomization procedure for cell reselection comprises:
receiving the set of randomization parameters from a network node, and wherein determining whether to perform the randomization procedure for cell reselection and/or whether to perform the randomization procedure using the obtained set of randomization parameters comprises:
responsive to determining that the set of randomization parameters have been received from the network node, determining to perform the randomization procedure for cell reselection.

4. The terminal device of any one of the preceding claims, wherein determining whether to perform the randomization procedure for cell reselection and/or whether to perform the randomization procedure using the obtained set of randomization parameters comprises:
determining to perform the randomization procedure for cell reselection without determining that a current time is within a particular time period associated with the set of randomization parameters.

5. The terminal device of any one of the preceding claims, wherein determining whether to perform the randomization procedure for cell reselection and/or whether to perform the randomization procedure using the obtained set of randomization parameters comprises:
determining to perform the randomization procedure for cell reselection without determining that an indication to perform the randomization procedure for cell reselection has been received.

6. The terminal device of any one of the preceding claims, wherein determining whether to perform the randomization procedure for cell reselection and/or whether to perform the randomization procedure using the obtained set of randomization parameters comprises:
responsive to determining that a measurement of a wireless connection between the terminal device and a serving cell is above a first threshold measurement, determining to perform the randomization procedure for cell reselection.

7. The terminal device of any one of the preceding claims, wherein determining whether to perform the randomization procedure for cell reselection and/or whether to perform the randomization procedure using the obtained set of randomization parameters comprises:
responsive to determining that a measurement of a wireless connection between the terminal device and a serving cell is below a second threshold measurement, determining not to perform the randomization procedure for cell reselection,
wherein the instructions further cause the terminal device to perform:
responsive to determining not to perform the randomization procedure for cell reselection, selecting, based on a set of absolute cell reselection priorities corresponding to the set of carrier frequencies and without performing the randomization procedure, a carrier frequency, from the set of carrier frequencies, with which to perform a cell reselection procedure.

8. The terminal device of any one of the preceding claims, wherein selecting the carrier frequency with which to perform a cell reselection procedure comprises:
selecting, using the randomization procedure and based on the set of randomization parameters, a subset of the carrier frequencies; and
selecting a carrier frequency, from the subset of the carrier frequencies, which is associated with a highest absolute cell reselection priority as the carrier frequency with which to perform the cell reselection procedure.

9. The terminal device of any one of claims 1 to 7, wherein selecting the carrier frequency with which to perform a cell reselection procedure comprises:
selecting, based on the set of randomization parameters, a carrier frequency, from the set of the carrier frequencies, as the carrier frequency with which to perform the cell reselection procedure.

10. The terminal device of any one of claims 1 to 7, wherein selecting the carrier frequency with which to perform a cell reselection procedure comprises:
modifying, using the randomization procedure and based on the set of randomization parameters, a set of absolute cell reselection priorities corresponding to the set of carrier frequencies to determine a modified set of absolute cell reselection priorities for the set of carrier frequencies; and
selecting a carrier frequency, from the set of the carrier frequencies, which is associated with the highest modified absolute cell reselection priority as the carrier frequency with which to perform the cell reselection procedure.

11. The terminal device of any one of the preceding claims, wherein the set of randomization parameters comprises at least one of:
an indication to include the set of carrier frequencies in the randomization procedure, wherein the selected carrier frequency is selected from the set of carrier frequencies,
an indication to include a subset of the set of carrier frequencies in the randomization procedure, and wherein the selected carrier frequency is selected from the subset of carrier frequencies,
an indication of the specific carrier frequencies to be included in the randomization procedure, wherein the selected carrier frequency is selected from the specific carrier frequencies to be included in the randomization procedure, and
offsets for absolute cell reselection priorities corresponding to at least some of the set of carrier frequencies.

12. The terminal device of any one of the preceding claims, wherein the set of randomization parameters comprises an indication to only include carrier frequencies that support low-power wake-up signalling (LP WUS) in the randomization procedure, and wherein the selected carrier frequency is selected from the carrier frequencies that support LP WUS.

13. The terminal device of any one of the preceding claims, wherein the instructions further cause the terminal device to perform:
determining which carrier frequencies of the set of carrier frequencies support LP WUS,
wherein the selected carrier frequency is selected from the set of carrier frequencies that support LP WUS.

14. The terminal device of any one of the preceding claims, wherein the instructions further cause the terminal device to perform:
determining, based on determining which carrier frequencies of the set of carrier frequencies support LP WUS, a subset of the set of carrier frequencies,
wherein the selected carrier frequency is selected from the subset of carrier frequencies.

15. A method comprising:
obtaining a set of carrier frequencies;
obtaining a set of randomization parameters for configuring a randomization procedure for cell reselection;
determining whether to perform the randomization procedure for cell reselection and/or whether to perform the randomization procedure using the obtained set of randomization parameters; and
responsive to determining to perform the randomization procedure for cell reselection and/or to perform the randomization procedure using the obtained set of randomization parameters, selecting, based on at least the set of randomization parameters, a carrier frequency, from the set of carrier frequencies, with which to perform a cell reselection procedure.
